# EUROPÄISCHE PATENTANMELDUNG

(11) **EP 2 583 554 A1**
(43) Veröffentlichungstag der Anmeldung: **24.04.2013**
(21) Anmeldenummer: 12000497.3
(22) Anmeldetag: 26.01.2012
(51) Int. Cl.: A01N 25/18, A01N 59/24, A01M 13/00

(54) **Begasungslösung mit Herstellungsverfahren, Begasungsverfahren, Begasungsvorrichtung und Begasungssystem**

(30) Priorität: 20.10.2011 DE 102011116504
(71) Anmelder: Linde Aktiengesellschaft, 80331 Munich (DE)
(72) Erfinder: Weis, Volker, 85276 Pfaffenhofen a.d.Ilm (DE)
(74) Vertreter: Galander, Marcus

(57) **Zusammenfassung**

Es wird eine Begasungslösung zur Begasung von landwirtschaftlichen Flächen (50) oder Produkten vorgeschlagen, die mit wenigstens einem unter Ausbringungsbedingungen gasförmigen, biotoxischen Begasungsmittel übersättigt ist. Wesentliche Aspekte der Erfindung betreffen eine Vorrichtung (100) zur Herstellung einer entsprechenden Begasungslösung, ein System (200) zur Begasung landwirtschaftlicher Flächen, und ein entsprechendes Verfahren (300)

## Beschreibung

Die Erfindung betrifft eine Begasungslösung zur Begasung von landwirtschaftlichen Flächen und/oder Produkten, ein Verfahren zur Herstellung einer entsprechenden Begasungslösung, ein Verfahren zur Begasung, eine entsprechende Begasungsvorrichtung und ein entsprechendes Begasungssystem.

### Stand der Technik

Die Begasung (Fumigation) von landwirtschaftlichen Flächen und/oder Produkten mittels biozider Wirkstoffe (Fumigenten) ist allgemein bekannt. Insbesondere dient die Begasung zur Desinfektion und Entwesung (Desinsektion bzw. Desinfestation). Sie kommt bei Schüttgut wie Getreide, porösen Materialen wie Holz und in Innenräumen zum Einsatz. Die Begasung kann auch zur Bekämpfung von Pilzen, Unkrautsamen und Schädlingen in bzw. auf landwirtschaftlichen Nutzflächen wie Agrar- bzw. Gewächshausböden zum Einsatz kommen.

Im Rahmen dieser Anmeldung sei unter Begasung das Ein- bzw. Aufbringen eines entsprechenden gasförmigen Wirkstoffs in bzw. auf landwirtschaftlichen Nutzflächen und/oder Produkte verstanden. Hierbei verwendete Wirkstoffe werden im Rahmen dieser Anmeldung unter dem Begriff "Begasungsmittel" zusammengefasst. Derartige Begasungsmittel sind in der Regel unter den verwendeten Ausbringungsbedingungen, also bei Atmosphärendruck und der jeweiligen Umgebungstemperatur, gasförmig.

Der Begriff "landwirtschaftliche Flächen" kann im Rahmen dieser Anmeldung beispielsweise Gewächshausböden, Agrarböden, Flächen in Lagerräumen und Flächen von zur Lagerung und/oder zum Transport entsprechender Güter verwendeten Transportbehältnissen umfassen. "Landwirtschaftliche Produkte" sind im Rahmen dieser Anmeldung sämtliche landwirtschaftlichen Güter, beispielsweise Getreide, Futterpflanzen, Saatgut, Holz und tierische Produkte wie Wolle, Felle, Pelze und/oder Fleisch.

Begasungsmittel müssen bestimmte Kriterien erfüllen, um entsprechend eingesetzt werden zu können. Ideale Begasungsmittel sind für Insekten, Milben, Nematoden, Bakterien, Pilze und ihre Sporen, Viren und andere Biota toxisch und in geringen Konzentrationen wirksam. Idealerweise sollten Begasungsmittel durch die begasten Materialien nur in geringem Umfang absorbiert werden. Die chronische Toxizität für Säuger sollte gering sein und der Abbau entweder rückstandsfrei erfolgen oder zu inerten, unschädlichen Abbauprodukten führen. Begasungsmittel sollten eine sichere Handhabung gewährleisten und keine nachteiligen Effekte auf begaste Produkte bzw. Flächen haben.

Wie beispielsweise in der WO 96/01051 A1 erläutert, sind die am häufigsten verwendeten Begasungsmittel Phosphin und Methylbromid. Zusätzlich wird Carbonylsulfid verwendet. Das zur Begasung landwirtschaftlicher Flächen überwiegend verwendete Methylbromid wird dabei als Flüssigkeit über Bewässerungsleitungen ausgebracht. Unter anderem aufgrund seiner Klimawirksamkeit wird jedoch eine Reduzierung des Methylbromideinsatzes angestrebt und durch entsprechende gesetzliche Vorgaben gefordert.

In der genannten WO 96/01051 A1 wird die Verwendung von Ethandinitril als Begasungsmittel vorgeschlagen. Ethandinitril (EDN), auch als Oxalonitril, Oxalsäuredinitril oder Dicyan bezeichnet, ist ein farbloses, giftiges, hoch entzündliches, stechendsüßlich riechendes Gas mit einem Siedepunkt von -21 °C. Es verhält sich chemisch ähnlich wie ein Halogen und wird daher auch als Pseudohalogen bezeichnet. Ethandinitril ist ein wichtiges Zwischenprodukt bei der Herstellung einer Reihe kommerzieller Endprodukte wie z.B. von Kunstdüngern und Nitrilen. Ethandinitril findet ferner in der Schweißtechnik Anwendung, da es mit Sauerstoff in der heißesten bekannten Flamme bei 4 640 K verbrennt. Weitere Anwendung findet Ethandinitril als Hochleistungstreibstoff und als Stabilisator bei der Herstellung von Nitrocellulose. Die Verwendung von Ethandinitril als Begasungsmittel wird auch in der WO 2005/037332 A1 und der US 6 001 383 A diskutiert.

Herkömmliche Verfahren zum Einsatz von Ethandinitril auf Agrarböden sind nicht befriedigend, da unter anderem kein ausreichendes Eindringen des Ethandinitrils in die Böden, und damit keine ausreichende Wirksamkeit gewährleistet ist.

Daher besteht der Bedarf nach verbesserten Möglichkeiten zur Begasung landwirtschaftlicher Flächen und/oder Produkte, insbesondere mit Ethandinitril.

### Offenbarung der Erfindung

Vor diesem Hintergrund schlägt die vorliegende Erfindung eine Begasungslösung zur Begasung von landwirtschaftlichen Flächen und/oder Produkten, ein Verfahren zur Herstellung einer entsprechenden Begasungslösung, ein Verfahren zur Begasung, eine entsprechende Begasungsvorrichtung und ein entsprechendes Begasungssystem mit den Merkmalen der unabhängigen Patentansprüche vor. Bevorzugte Ausgestaltungen sind Gegenstand der Unteransprüche sowie der nachfolgenden Beschreibung.

### Vorteile der Erfindung

Erfindungsgemäß wird eine Begasungslösung zur Begasung landwirtschaftlicher Flächen und/oder Produkte vorgeschlagen, die mit wenigstens einem unter Ausbringungsbedingungen gasförmigen, biotoxischen Begasungsmittel übersättigt ist.

Der Begriff "übersättigt" soll im Rahmen dieser Anmeldung eine Gaskonzentration beschreiben, die oberhalb der durch die Henry-Konstante vorgegebenen Konzentration bei den Ausbringungsbedingungen eines entsprechenden Begasungsmittels liegt. Wie erwähnt, umfassen übliche Ausbringungsbedingungen typischerweise die jeweils vorherrschende Umgebungstemperatur, also einen typischen Bereich von z.B. 0°C bis 40°C, und Atmosphärendruck. Ein in einer Lösung, beispielsweise Wasser, löslicher flüchtiger Stoff, beispielsweise ein entsprechendes Begasungsmittel, steht mit der flüssigen Phase im Lösungsgleichgewicht. Bei einer überstättigten Lösung übersteigt die Konzentration in der Lösung jene des Lösungsgleichgewichts. In der Regel wird ein entsprechender flüchtiger Stoff daher, wenn er übersättigt in der Lösung vorliegt, über einen bestimmten Zeitraum aus der Lösung austreten (ausgasen), bis sich das Lösungsgleichgewicht eingestellt hat. Aus dem Alltag bekannte übersättigte Lösungen liegen beispielsweise in kohlendioxidversetzten Mineralwässern vor, aus denen das Kohlendioxid sukzessive ausperlt.

Erfindungsgemäß wurde erkannt, dass durch die Ausbringung einer mit einem Begasungsmittel übersättigten Lösung eine besonders vorteilhafte Applikation eines Begasungsmittels erfolgen kann. Ein entsprechendes Begasungsmittel, beispielsweise Ethandinitril, kann dabei als Flüssiggas im flüssigen Zustand in ein entsprechendes Lösungsmittel eingebracht werden, wobei das Begasungsmittel in Form eines Flüssiggases bereitgestellt werden kann. Aufgrund der Siedetemperatur von z.B. Ethandinitril, die, wie erwähnt, bei -21 °C liegt, geht dieses sofort in seinen gasförmigen Zustand über. Wird das Ethandinitril, vorteilhafterweise unter Druck, in eine wässrige Lösung eingebracht, kann eine bei Ausbringungsbedingungen übersättigte Lösung, analog zum Versatz von Wasser mit Kohlendioxid, erzeugt werden.

Die Flüssigkeit mit dem gelösten Begasungsmittel wird, vorteilhafterweise unter Druck, in einer Bewässerungsleitung zum Ausbringungsort transportiert. Nach der Ausbringung entsteht am Ausbringungsort ein Dreiphasensystem:
Eine Oberflächengasphase, die sich aus dem unmittelbar am Austrittsort ausgasenden Begasungsmittel bildet, kann zur Bekämpfung von Oberflächenschädlingen und Unkräutern verwendet werden.

Eine weitere Phase, nämlich eine noch übersättigte Lösung, aus der das Begasungsmittel sukzessive austritt, dringt in den Boden ein und erreicht dadurch auch Schädlinge im Boden. Die Bekämpfung dieser Schädlinge erfolgt damit durch eine entsprechend unterhalb der Bodenoberfläche gebildete Bodengasphase. Der besondere Vorteil besteht dabei einerseits darin, dass, im Gegensatz zu herkömmlichen Begasungsverfahren, die übersättigte Lösung besonders gut und tief in den Boden eindringen kann, und, andererseits, die Bodengasphase durch das ausgasende Begasungsmittel kontinuierlich erneuert wird. Ein entsprechendes Eindringen kann durch eine gezielte Bewässerung der entsprechenden landwirtschaftlichen Fläche vor der Ausbringung der Begasungslösung gefördert werden, wodurch die Lösung vom Boden besonders gleichmäßig aufgesogen wird.

Eine dritte Phase enthält, nach dem Ausgasen, gelöstes Ethandinitril in einer dem Lösungsgleichgewicht entsprechenden Konzentration. Das Ethandinitril kann, wie beispielsweise auch in der WO 96/01051 A1 offenbart, auch in gelöster Form seine toxische Wirkung entfalten. Ethandinitril reagiert in Wasser im Rahmen einer zweistufigen Reaktion über 12 bis 24 Stunden durch Hydrolyse zunächst zu Oxamid und weiter zu Ammoniak und Kohlendioxid. Die Verwendung von Oxamid als Depot-Dünger ist bekannt. Ein weiterer Vorteil einer entsprechenden Begasungslösung ist daher ein entsprechender Düngungseffekt durch die Ethandinitril-Abbauprodukte. Neben der Bereitstellung von Ammoniakstickstoff kann dabei eine besoders zielortnahe Kohlendioxiddüngung (Blattdüngung) bewirkt werden.

Wie erläutert, enthält eine Begasungslösung gemäß einer vorteilhaften Ausgestaltung daher Ethandinitril als Begasungsmittel. Ein besonderer Vorteil von Ethandinitril ist der, dass es größtenteils im Boden bzw. in Bodennähe verbleibt und dadurch die Handhabung und Arbeitssicherheit erhöht wird. Ethandinitril weist ferner, wie erwähnt, eine ausreichende Toxizität gegen die zu bekämpfenden Schädlinge auf. Die Erfindung ist jedoch nicht auf Ethandinitril beschränkt, sondern grundsätzlich mit allen Begasungsmitteln verwendbar, die in entsprechender Konzentration in Begasungslösungen einbebracht werden können.

Die Henry-Konstante von Ethandinitril bei 20°C beträgt 0,19. Eine erfindungsgemäß vorteilhaft verwendbare Begasungslösung enthält daher bei 20°C mehr als 0,19 Mol Ethandinitril pro Liter, also, je nach Temperatur, mehr als 8 g/L, mehr als 9 g/L, mehr als 10 g/L, mehr als 11 g/L, mehr als 12 g/L, mehr als 13 g/L, mehr als 14 g/L, mehr als 15 g/L oder mehr als 20 g/L Ethandinitril. Je stärker eine entsprechende Lösung mit Ethandinitril übersättigt ist, desto stärker wird die Oberflächengasphase ausgebildet.

Mit besonderem Vorteil kann eine Begasungslösung verwendet werden, die zusätzlich mit Kohlendioxid übersättigt ist. Wie ebenfalls in der WO 96 01051 A1 beschrieben, bewirkt Kohlendioxid eine Verbesserung des toxischen Effekts von Ethandinitril, vermutlich in dem es die Atmung der Schadorganismen anregt und damit eine verbesserte Aufnahme des Ethandinitrils bewirkt. Gleiches gilt, wie für den Fachmann ersichtlich, auch für andere gasförmige Biozide. Kohlendioxid wirkt sich ferner positiv auf das Pflanzenwachstum aus, indem es die Photosyntheseleistung erhöht. Das Versetzen von Wasser mit Kohlendioxid ist aus der Lebensmitteltechnologie allgemein bekannt.

Vorteilhafterweise wird eine entsprechende Begasungslösung als wässrige Lösung bereitgestellt, die damit auch zur Bewässerung dienen kann und zu herkömmlichen Bewässerungsanlagen kompatibel ist. Die wässrige Lösung kann daher durch ein entsprechendes Bewässerungsverfahren, insbesondere durch Tropf- bzw. Tröpfchenbewässerung (Drip Irrigation) ausgebracht werden. Eine derartige wässrige Lösung kann auch weitere Wirkstoffe, Düngemittel, Mineralien und dergleichen enthalten, eine Kombination mehrerer Begasungsmittel zur Herstellung und/oder Erhöhung einer synergistischen Wirkung ist ebenfalls möglich.

Ein Verfahren zur Herstellung einer erläuterten Begasungslösung umfasst, wenigstens ein unter Ausbringungsbedingungen gasförmiges, biotoxisches Begasungsmittel unter Druck in ein wässriges Trägerfluid einzubringen. Hierzu wird vorteilhafterweise eine entsprechende Vorrichtung verwendet.

Vorteilhafterweise erfolgt die Einbringung des Begasungsmittels, wie erläutert, in flüssiger Form (in Form eines Flüssiggases) und/oder bei einem Druck von 0,1 bis 30 bar in das Trägerfluid. Der Druck und die Einbringungsform richten sich dabei nach den physikalischen Eigenschaften des jeweils einzubringenden Gases.

Ein Verfahren zur Begasung von landwirtschaftlichen Flächen und/oder Produkten umfasst das Herstellen einer entsprechenden Begasungslösung, den Transport der Begasungslösung zu einem Ausbringungsort und das Ausbringen der Begasungslösung an dem Ausbringungsort. Mit besonderem Vorteil wird zum Transport und Ausbringen der Begasungslösung ein Tropfbewässerungssystem verwendet, da hierdurch eine besonders gezielte Ausbringung in flüssiger Form gewährleistet ist.

Wie erwähnt, erfolgt die Herstellung einer entsprechenden Begasungslösung vorteilhafterweise mittels einer entsprechenden Vorrichtung. Diese weist eine Druckkammer zur Aufnahme eines wässrigen Trägerfluids, eine Einbringeinrichtung zum Einbringen des wenigstens einen Begasungsmittels in das wässrige Trägerfluid und eine Entnahmeeinrichtung zur, insbesondere kontinuierlichen, Entnahme der Begasungslösung aus der Druckkammer auf. Eine entsprechende Vorrichtung kann als Teil eines Bewässerungssystems ausgebildet sein und zur kontinuierlichen Bereitstellung einer Begasungslösung eingerichtet sein.

Die Einbringeinrichtung umfasst vorteilhafterweise eine Druckleitung zur Zuleitung des wenigstens einen Begasungsmittels und eine sich in Strömungsrichtung verjüngende und auf eine Prallplatte ausgerichtete Düse. Die Düse verjüngt sich in einer vorteilhaften Ausgestaltung zur Erzeugung eines homogenen Druckabfalls in Form eines Kegelstumpfs. Die Düse ist vorteilhafterweise derart auf die Prallplatte ausgerichtet, dass ein durch die Düse erzeugte Gasstrom durch die Prallplatte fein verteilt und in der Flüssigkeit eine turbulente Strömung erzeugt wird.

Vorteilhafterweise sind ferner Mittel zur Laminarisierung einer Fluidströmung in der Druckkamer vorgesehen. Diese umfassen beispielsweise Lochblenden und sogenannte Laminar-Flow-Elemente. Hierdurch kann ein Pulsieren des entsprechend erzeugten Begasungsmittel-Wasser-Gemischs verhindert werden.

Zur Einstellung des Drucks in der Druckkammer sind vorteilhafterweise Druckeinstellmittel vorgesehen, die in Form eines Kugelhahns, eines Nadelventils, eines Membranventils und/oder eines Massendurchflussreglers ausgebildet sind. Ein Kugelhahn ist in diesem Zusammenhang besonders vorteilhaft, weil er den gerinsten Widerstand für das einzubringende Flüssiggas darstellt.

Wie erwähnt, ist eine entsprechende Vorrichtung vorteilhafterweise als Teil eines Systems zur Begasung landwirtschaftlicher Flächen und/oder Produkte ausgebildet. Die Vorrichtung ist vorteilhafterweise an ein Tropfbewässerungssystem zum Transport und Ausbringen der Begasungslösung angeschlossen.

Die Erfindung ist anhand von Ausführungsbeispielen in der Zeichnung schematisch dargestellt und wird im Folgenden unter Bezugnahme auf die Zeichnungen ausführlich beschrieben.

### Figurenbeschreibung

- Figur 1: zeigt eine Vorrichtung zur Herstellung einer Begasungslösung gemäß einer besonders bevorzugten Ausführungsform der Erfindung.
- Figur 2: zeigt ein System zur Begasung von landwirtschaftlichen Flächen und/oder Produkten gemäß einer besonders bevorzugten Ausführungsform der Erfindung.
- Figur 3: zeigt ein Verfahren zur Begasung von landwirtschaftlichen Flächen und/oder Produkten gemäß einer besonders bevorzugten Ausführungsform der Erfindung.

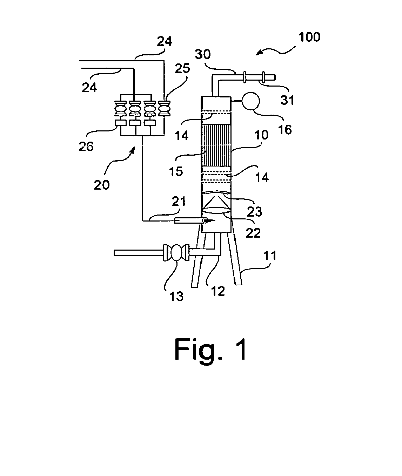

In Figur 1 ist eine Vorrichtung zur Herstellung einer Begasungslösung gemäß einer besonders bevorzugten Ausführungsform der Erfindung schematisch dargestellt und ingesamt mit 100 bezeichnet. Die Vorrichtung 100 umfasst eine Druckkammer 10, die im Beispiel der Figur 1 senkrecht angeordnet ist. Die Druckkammer wird über Abstützelemente 11 getragen. Bodenseitig der Druckkammer 10 ist eine Zufuhreinrichtung 12 für Trägerfluid, beispielsweise von Wasser, vorgesehen. Als Druckeinstellmittel 13 ist beispielsweise ein Kugelhahn vorgesehen. Eine Einbringeinrichtung 20 zur Einbringung des Begasungsmittels umfasst eine Zuleitung 21 mit einer Düse 22. Die Düse ist, wie zuvor erläutert, vorteilhafterweise in Form eines Kegelstumpfs ausgebildet und auf eine Prallplatte 23 ausgerichtet. Als weitere, nicht näher erläuterte, Elemente der Einbringeinrichtung können entsprechende Gasleitungen 24, beispielsweise für Ethandinitril oder andere Begasungsmittel und/oder Inertgase, diesen zugeordnete Ventile 25 und Blenden 26 vorgesehen sein.

Zu Laminarisierung des Fluidflusses in der Druckkammer 10 sind beispielsweise Lochblenden 14 und/oder Laminar-Flow-Elemente 15 in Form von Rohrbündeln bekannter Art vorgesehen. Eine Drucküberwachung erfolgt mittels eines Manometers 16. Eine Entnahmeeinrichtung 30 zur Entnahme der Begasungslösung ist vorgesehen, die beispielsweise ein Schauglas 31 umfasst.

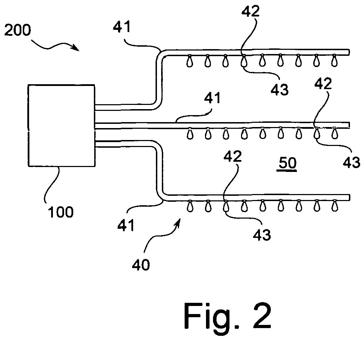

Figur 2 zeigt ein System zur Begasung einer landwirtschaftlichen Fläche und/oder von landwirtschaftlichen Produkten, die eine Vorrichtung 100 zur Herstellung einer Begasungslösung, beispielsweise gemäß Figur 1, umfasst. Das System ist insgesamt mit 200 bezeichnet. Dem System 200 ist ein Tropfbewässerungssystem 40 zugeordnet, das Druckleitungen zum Transport einer, vorzugsweise wässrigen, Begasungslösung umfasst. Das Tropfbewässerungssystem 40 ist auf einer landwirtschaftlichen Fläche 50 angeordnet. Zur Ausbringung der Begasungslösung weisen die Druckleitungen 41 mehrere Öffnungen 42 auf, aus denen die Begasungslösung in Form von Tröpfchen 43 austritt. Nach dem Austreten wird, wie erläutert, ein Teil des Begasungsmittels freigesetzt. Die Öffnungen 42 in den Druckleitungen 41 sind vorzugsweise in der Nähe eines Zielorts angeordnet.

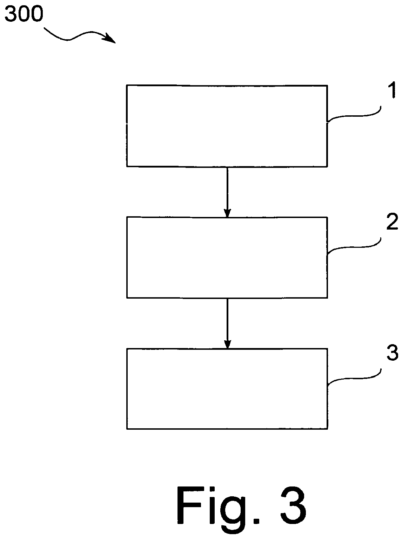

Figur 3 veranschaulicht ein Verfahren gemäß einer besonders bevorzugten Ausführungsform der Erfindung. Dieses ist ingsgesamt mit 300 bezeichnet. In einem ersten Verfahrensschritt 1 erfolgt die Herstellung einer Begasungslösung durch Einbringen wenigstens eines unter Ausbringungsbedingungen gasförmigen, biotoxischen Begasungsmittels unter Druck in ein, vorzugsweise wässriges, Trägerfluid. In einem zweiten Schritt 2 erfolgt der Transport der Begasungslösung, beispielsweise in dem erläuterten System 200, zu einem Ausbringungsort.

In einem dritten Schritt 3 wird die Begasungslösung an dem Ausbringungsort ausgebracht, wo das Begasungsmittel teilweise ausgast.

### Bezugszeichenliste

- 10: Druckkammer
- 11: Abstützelemente
- 12: Trägerfluidzufuhr
- 13: Druckeinstellmittel
- 14: Lochblende
- 15: Laminar-Flow-Elemente
- 16: Manometer

- 20: Einbringeinrichtung
- 21: Zuleitung
- 22: Düse
- 23: Prallplatte
- 24: Gasleitungen
- 25: Ventil
- 26: Blende

- 30: Entnahmeeinrichtung
- 31: Schauglas

- 40: Tropfbewässerungssystem
- 41: Druckleitung
- 42: Öffnungen
- 43: Tropfen

- 50: Landwirtschaftliche Fläche

- 100: Vorrichtung zur Herstellung einer Begasungslösung
- 200: Begasungssystem
- 300: Begasungsverfahren

## Patentansprüche

1. Begasungslösung zur Begasung von landwirtschaftlichen Flächen (50) und/oder Produkten, die mit wenigstens einem unter Ausbringungsbedingungen gasförmigen, biotoxischen Begasungsmittel übersättigt ist.

2. Begasungslösung nach Anspruch 1, bei dem das wenigstens eine Begasungsmittel Ethandinitril umfasst.

3. Begasungslösung nach Anspruch 2, die mehr als 8 g/L, mehr als 9 g/L, mehr als 10 g/L, mehr als 11 g/L, mehr als 12 g/L, mehr als 13 g/L, mehr als 14 g/L, mehr als 15 g/L oder mehr als 20 g/L Ethandinitril enthält.

4. Begasungslösung nach einem der vorstehenden Ansprüche, die ferner mit Kohlendioxid übersättigt ist.

5. Begasungslösung nach einem der vorstehenden Ansprüche, die als wässrige Lösung bereitgestellt ist.

6. Verfahren zur Herstellung einer Begasungslösung nach einem der vorstehenden Ansprüche, bei dem wenigstens ein unter Ausbringungsbedingungen gasförmiges, biotoxisches Begasungsmittel unter Druck in ein vorzugsweise wässriges Trägerfluid eingebracht wird.

7. Verfahren nach Anspruch 6, bei dem das wenigstens eine Begasungsmittel in flüssiger Form und/oder bei einem Druck von 0,1 bis 30 bar in das Trägerfluid eingebracht wird.

8. Verfahren (300) zur Begasung von landwirtschaftlichen Flächen und/oder Produkten, das umfasst:
a) Herstellen (1) einer Begasungslösung nach einem der Ansprüche 1 bis 5 und/oder durch ein Verfahren gemäß Anspruch 6 oder 7,
b) Transport (2) der Begasungslösung zu einem Ausbringungsort, und
c) Ausbringen (3) der Begasungslösung an dem Ausbringungsort.

9. Verfahren (300) nach Anspruch 8, bei dem zum Transport (2) und Ausbringen (3) der Begasungslösung ein Tropfbewässerungssystem (40) verwendet wird.

10. Vorrichtung (100) zur Herstellung einer Begasungslösung nach einem der Ansprüche 1 bis 5 und/oder durch ein Verfahren gemäß Anspruch 6 oder 7, die eine Druckkammer (10) zur Aufnahme des wässrigen Trägerfluids, eine Einbringeinrichtung (20) zum Einbringen des wenigstens einen Begasungsmittels in das wässrige Trägerfluid und eine Entnahmeeinrichtung (30) zur, insbesondere kontinuierlichen, Entnahme der Begasungslösung aufweist.

11. Vorrichtung (100) nach Anspruch 10, bei der die Einbringeinrichtung (20) eine Druckleitung (21) zur Zuleitung des wenigstens einen Begasungsmittels und eine sich in Strömungsrichtung in Form eines Kegelstumpfs verjüngende und auf eine Prallplatte (23) ausgerichtete Düse (22) aufweist.

12. Vorrichtung nach Anspruch 10 oder 11, die Mittel (14, 15) zur Laminarisierung einer Fluidströmung in der Druckkammer (10) aufweist.

13. Vorrichtung nach einem der Ansprüche 10 bis 12, die Mittel (13) zum Einstellen eines Drucks in der Druckkammer (10) aufweist.

14. Vorrichtung nach Anspruch 13, bei der die Mittel (13) zum Einstellen des Drucks in der Druckkammer (10) einen Kugelhahn aufweisen.

15. System (200) zur Begasung von landwirtschaftlichen Flächen und/oder Produkten, das eine Vorrichtung (100) zur Herstellung einer Begasungslösung gemäß einem der Ansprüche 10 bis 14 und ein Tropfbewässerungssystem (40) zum Transport (2) und Ausbringen (3) der Begasungslösung aufweist.
